# EUROPÄISCHE PATENTANMELDUNG

(11) **EP 4 787 678 A1**
(43) Veröffentlichungstag der Anmeldung: **05.08.2026**
(21) Anmeldenummer: 25155512.4
(22) Anmeldetag: 03.02.2025
(51) Int. Cl.: H02K 7/00, H02K 9/06, H02K 9/22, H02K 15/14, F28D 15/02

(54) **VERFAHREN ZUR THERMISCHEN ANBINDUNG EINER HEATPIPE AN DIE INNENWANDUNG EINER WELLENBOHRUNG EINES ROTORS**

(71) Anmelder: Innomotics GmbH, 90441 Nürnberg (DE)
(72) Erfinder: Büttner, Klaus, 97618 Hollstadt (DE); Kirchner, Klaus, 97645 Ostheim (DE); Warmuth, Matthias, 97618 Windshausen (DE)
(74) Vertreter: Michalski Hüttermann & Partner mbB

(57) **Zusammenfassung**

Die Erfindung betrifft ein Verfahren zur thermischen Anbindung einer Heatpipe (10) an die Innenwandung (20) einer Wellenbohrung (8) eines Rotors (4) einer dynamoelektrischen rotatorischen Maschine (1) durch folgende Schritte:
- eine Welle (6) des Rotors (4) wird mit einer Wellenbohrung (8), insbesondere einer Sackbohrung oder Durchgangsbohrung versehen,
- die Heatpipe (10), die eine geschlossene Hülle (11) aufweist, wird mittels Umformen an die Innenwandung (20) der Wellenbohrung (8) thermisch angebunden.

## Beschreibung

Die Erfindung betrifft ein Verfahren zur thermischen Anbindung einer Heatpipe an die Innenwandung einer Wellenbohrung eines Rotors einer rotatorischen dynamoelektrischen Maschine, einen damit ausgestatteten Rotor dessen Welle mit einer Heat Pipe versehen ist, die Herstellung eines derartigen Rotors, als auch eine rotatorische dynamoelektrische Maschine mit einem derartigen Rotor.

Rotatorische dynamoelektrische Maschinen kühlen u.a. ihre Rotoren normalerweise mit einem durch einen Axiallüfter verursachten Kühlluftstrom. Falls jedoch die Wärmelast des Rotors, z.B. bei Asynchronmaschinen größer ist, reicht ein derartiger Kühlluftstrom allein nicht mehr zur Rotorkühlung aus. Es werden dabei dann Hohlwellen vorgesehen, in denen ein Kühlmedium enthalten ist, das die Wärme des Rotors aus und über diese Welle axial nach außen abführt.

Des Weiteren sollen auch bei permanenterregten Synchronmaschinen, für die auf oder im Rotor positionierten Permanentmagnete vorgegebene Temperaturgrenzen einhalten werden, um nicht in eine irreversible Entmagnetisierung der Permanentmagnete zu gelangen.

So zeigt beispielsweise die DE 10 2009 051 114 A1 eine elektrische Maschine unter anderem mit einem Rotor, wobei der Rotor eine Hohlwelle aufweist und wobei mittels der Hohlwelle ein abgeschlossener Hohlraum ausgebildet ist, wobei der abgeschlossene Hohlraum zur Aufnahme eines Kältemittels vorgesehen ist, wobei im abgeschlossenen Hohlraum eine dreidimensionale Transportstruktur zum Transport des Kältemittels vorgesehen ist. Damit wird die anfallende Wärme über diese Transportstruktur axial nach außen gegeben und dort über einen Kühlluftstrom rückgekühlt.

Zur Kühlung von Rotoren werden auch Heat Pipes in einer Welle platziert. Dazu wird eine Wellenbohrung mit einem geringfügig größeren Durchmesser als die Heat Pipe ausgeführt, so dass eine einfache Montage durch Einschieben dieser Heat Pipe möglich ist.

Nachteilig hierbei ist, dass sich aufgrund eines dadurch konstruktionsbedingten Spaltes zwischen der Wandung der Heat Pipe und der Innenseite der Wellenbohrung eine mangelhafte wärmetechnische Anbindung der Heat Pipe an die Wellenbohrung ergibt. Dieser Spalt kann bis zu mehrere Zehntel mm betragen.

Um diesen Nachteil gering zu halten werden, beim Einsetzen von Heat Pipes in Wellenbohrungen Wärmeleitpasten oder -fette eingesetzt.

Diesen kompletten Spalt jedoch zuverlässig mit Wärmeleitpaste auszufüllen ist vergleichsweise aufwändig.

Zudem liegen die Wärmleitwerte dieser Pasten auf einem niedrigen Niveau von ca. 1 - 6 W/mK womit die Effizienz der Heat Pipe und damit die Kühleffizienz herabgesetzt wird.

Ausgehend davon liegt der Erfindung die Aufgabe zugrunde eine Heat Pipe in einer Welle eines Rotors mit zeitlich konstantem und vergleichsweise hohem Wärmeübergang zuverlässig zu positionieren. Ein derartiger Rotor soll dabei die Effizienz von Asynchronmaschinen und permanenterregten Synchronmaschinen steigern.

Die Lösung der gestellten Aufgabe gelingt durch die Merkmale der unabhängigen Ansprüche.

Vorteilhafte Ausgestaltungen der Erfindung sind den abhängigen Ansprüchen zu entnehmen.

Erfindungsgemäß wird die wärmetechnische bzw. thermische Anbindung einer Heatpipe an die Welle eines Rotors einer dynamoelektrischen Maschine verbessert, insbesondere der Wirkungsgrad von Asynchronmaschinen und permanenterregten Synchronmaschinen mit einem derartigen Rotor gesteigert, wobei auf den Einsatz einer Wärmeleitpaste zwischen Heatpipe und Welle verzichtet werden kann.

Je nachdem wie die Kondensatorzone der Heatpipe aufgebaut ist werden die Bleche des Rotors vor oder nach dem Einsetzen der Heatpipe in die Wellenbohrung mit der Welle drehfest verbunden z.B. aufgeschrumpft.

Idealerweise wird die Heatpipe sogar erst an der fertigen dynamoelektrischen Maschine eingeschoben, wenn also die dynamoelektrischen Maschine komplett mit Rotor und Lagerschilden komplettiert ist.

Für die später noch genauer beschriebene gestauchte Heatpipe-Variante kann auch die Kondensatorzone getrennt aufgebaut sein (Nabenteil und Lüfter). Damit wird das "Aufziehen" der Lagerung auf der Belüftungsseite vereinfacht.

Die Heatpipe weist eine geschlossene Hülle auf, mit zumindest einer Verdampferzone und einer Kondensatorzone, die durch eine Transportzone verbunden sind.

Die Heatpipe wird bei dem erfindungsgemäßen Verfahren in eine Bohrung einer Welle eines Rotors einer dynamoelektrischen rotatorischen Maschine eingesetzt. Diese Wellenbohrung kann als zentrische Sackloch- oder als Durchgangsbohrung ausgeführt sein. Vorzugsweise werden dafür die Welle einer spanabhebenden Bearbeitung unterzogen, wie z.B. Bohren.

Die Verdampferzone der Heatpipe weist ungefähr die axiale Länge des Blechpakets des Rotors auf, um die im Betrieb der dynamoelektrischen rotatorischen Maschine dort anfallende Wärme aufnehmen zu können.

Eine mikroskalige Struktur zumindest in der Kondensatorzone, also innerhalb der Hülle der Heatpipe kann die Kühlungseffekte verbessern.

Eine thermisch gut leitende Verbindung ist somit von der Innenseite der Wellenbohrung auf die Verdampferzone und von der Kondensatorzone auf eine Kühlstruktur, insbesondere einen Lüfter anzustreben.

Bei dem erfindungsgemäßen Verfahren wird nunmehr die Heatpipe mit ihrer geschlossenen Hülle, insbesondere die Verdampferzone mittels Umformen an die Innenseite der Wellenbohrung thermisch angebunden.

Ein vergleichsweise dünnwandiges Rohr aus vergleichsweise weichem Metall bildet dabei das Basismaterial für die Herstellung der Hülle der Heatpipe, die somit ohne große Krafteinwirkung leicht umformbar ist.

Vorzugsweise wird dabei weichgeglühtes Kupfer mit einer Brinellhärte im Bereich 35-40 HB (H035) eingesetzt.

Die Heatpipe wird mit einem etwas kleineren Durchmesser als die Wellenbohrung ausgeführt, um ein einfaches axiales Einsetzen der Heatpipe in die Bohrung zu ermöglichen.

Um den Umformprozess einfacher durchführen zu können, wird die Heatpipe in ihrer Länge mit einem axialen Übermaß bzgl. der axialen Einbautiefe in die Bohrung vorgesehen.

Nach dem Einsetzen und Positionieren der Heatpipe in die Wellenbohrung wird die Heatpipe axial gestaucht. Dies ist möglich, da die Hülle aufgrund der geringen Härte leicht verformbar ist. Mit dem axialen Stauchen wächst der Außendurchmesser der Hülle, so dass sich ein direkter, gut wärmeleitender Kontakt der Innenwandung/Innenseite der Wellenbohrung mit der Hülle der Heatpipe einstellt. Dieser Stauchungsprozess führt zu einer axialen und umfänglich betrachtet nahezu kompletten Kontaktierung der Hülle, insbesondere der Verdampferzone an die Innenwandung der Wellenbohrung.

Das axiale Stauchen kann durch gezielten Druck oder Schläge auf die überstehende Stirnseite der Hülle der Heatpipe erfolgen.

Durch den axialen Stauchprozess, z.B. auch durch das Aufschieben einer entsprechend konischen Lüfternabe lässt sich außerdem auf der Kondensatorseite ein Konus ausformen.

Die Außendurchmesser der Heatpipe sowie der Konus der Heat Pipe in zumindest Abschnitten der Kondensatorzone wird somit erst beim Zusammenbau der Welle mit dem Lüfter geformt.

Auch bereits vorhandene Heatpipes - mit einer klassischen "dicken" Hülle - können vor dem axialen Einsetzen durch dementsprechendes Weichglühen für dieses Einsetz-Verfahren vorbereitet werden. Mit Weichglühen im Bereich von 400 - 600 °C erreicht man ebenfalls Härtewerte für der Hülle im Bereich 35-40 HB.

Beim axialen Stauchen der Heatpipe und der damit verbunden zumindest abschnittsweise, jedoch eher überwiegenden Vergrößerung des Durchmessers der Hülle besteht jedoch die Gefahr, dass die Kapillarstruktur an der Innenwand der Hülle der Heatpipe abplatzt.

Deshalb kann für diese Ausführung der Heat Pipe auf die Kapillarstruktur, insbesondere in der Transportzone verzichtet werden. Die Funktion dieser Kapillarstruktur übernimmt beim Betrieb der dynamoelektrischen Maschine die Drehzahl des Rotors. Durch Drehbewegung des Rotors wird das Kühlmedium der Heatpipe radial nach außen geschleudert und verteilt sich als gleichmäßiger Film in axialer Richtung von der Kondensatorzone zur Verdampferzone. Somit sind nicht zwangsläufig Kapillare notwendig, um den Kreislauf innerhalb der Heatpipe aufrecht zu erhalten.

In einer Ausführung wird der Querschnitt der Heatpipe nicht kreisrund gestaltet, sondern derart, dass sich beim axialen Fügen in die Wellenbohrung eine Verformung einstellt, die einerseits das axiale Einschieben mit geringer Kraft ermöglicht und zudem eine Erhöhung der Kontaktfläche zwischen Hülle und Innenwandung der Wellenbohrung erreicht wird.

Dabei ist vor dem axialen Fügen der Heatpipe in die Wellenbohrung ein Übermaß in mindestens einer Ebene vorhanden. Umfänglich betrachtet liegt somit abschnittsweise ein Übermaß vor.

Eine vorzugweise Gestaltung dieses Querschnitts der Hülle der Heatpipe kann z.B. eine elliptische oder Kleeblattform sein, womit sich durch die Verformung beim Einschieben eine relativ große Kontaktfläche zur Wellenbohrung im Winkel von ca. 300° ergibt.

Im Betrieb der dynamoelektrischen Maschine, unter Fliehkrafteinwirkung der Welle, bleibt es bei einem stabilen Kontakt der Heatpipe zur Innenwandung der Wellenbohrung, der sich ggf. sogar noch verstärkt.

Grundsätzlich sind diese Heatpipes folgendermaßen ausgeführt: Zumindest eine Stirnseite der Heat Pipe ist leicht konisch verlaufend, so dass die Geometrie das axiale Einfädeln der Heatpipe in die Wellenbohrung erleichtert und/oder das Positionieren der Lüfter auf der Kondensatorzone. Zumindest die Kondensatorzone weist innerhalb der Hülle eine mikroskalige Struktur auf, wobei diese Struktur thermisch leitend mit einer Wandung der Hülle im Bereich der Kondensatorzone verbunden ist. Die mikroskalige Struktur kann als rippenartige Struktur und/oder zapfenförmige Struktur und/oder porenartige Vernetzung ausgebildet sein. Ergänzend oder optional weist die Kondensatorzone eine innere Konizität aufweist, die sich insbesondere Richtung Verdampferzone erweitert. Ein Kühler auf der Kondensatorzone ist als Lüfter ausgebildet, der thermisch leitend mit der Kondensatorzone verbunden ist.

Die Vorteile dieser erfindungsgemäßen thermischen Anbindung der Heatpipes an die Innenwandung der Wellenbohrung:
Ein Einsatz von Wärmeleitpasten sowie deren aufwändiges Platzieren ist nicht erforderlich. Dies erleichtert den Montagprozess und führt letztlich zu einer verbesserten Effizienz einer dynamoelektrischen Maschine. Es ist zwangsläufig keine Kapillarstruktur, insbesondere als Transportzone erforderlich.

Durch den erfindungsgemäßen Aufbau der Welle tritt keine Veränderung der Effizienz durch Alterung von den Materialien, wie z.B der Wärmeleitpaste auf.

Diese Technik ist insbesondere für Asynchrontechnik nutzbar, da hier die Blechpakete des Rotors hohe Temperaturen aufweisen und durch verbesserte Kühlung die Effizienz gesteigert werden kann. Die Bleche des Rotors sind dabei drehfest mit der Welle verbunden, sodass auch ein thermisch gut leitfähiger Kontakt zwischen Blechpaket und Welle gegeben ist.

Ein Einsatz in Rotoren der Synchronmotoren hat den Vorteil, dass dadurch die eingebetteten Permanentmagnete nur noch reduzierten Temperaturen ausgesetzt sind.

Somit ist nunmehr erfindungsgemäß ein Rotor mit einer Heat Pipe in der Welle bereitgestellt, wobei der Rotor eine erhöhte Effizienz aufgrund der verbesserten Wärmeaufnahme im Verdampfungszone aufweist. Dies wirkt sich damit vorteilhaft auch auf die Effizienz und die Kompaktheit der jeweiligen dynamoelektrischen Maschinen aus.

Der die Kondensatorzone umgebende Kühler ist insbesondere als Lüfter ausgebildet, der einen hohen thermischen Leitwert beinhaltet und mit der Kondensatorzone thermisch gut leitend gekoppelt ist. Dies führt zusammen mit einem durch den Lüfter generierten Luftstrom im Betrieb der dynamoelektrischen Maschine zu einer effizienten Kühlung der Kondensatorzone und damit zu einer verbesserten Kühlung des jeweiligen Rotors.

Der Lüfter ist vorzugsweise aus einem gut wärmeleitfähigen Material wie Aluminium, Kupfer oder Aluminiumlegierungen oder Kupferlegierungen.

Die Erfindung sowie vorteilhafte Ausgestaltungen der Erfindung werden anhand prinzipiell dargestellter Ausführungsbeispiele dargestellt, dabei zeigen:
- FIG 1: einen prinzipiellen Längsschnitt durch eine dynamoelektrische rotatorische Maschine,
- FIG 2: einen prinzipiellen Aufbau einer Heatpipe,
- FIG 3 bis 6: prinzipielle Darstellung der Positionierung der Heatpipes in einer Wellenbohrung.

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 4 und damit auf die entsprechende Symmetrieachse des Stators 2. Dabei beschreibt "axial" eine Richtung parallel zur Achse 7, "radial" beschreibt eine Richtung orthogonal zur Achse 7, auf diese zu oder auch von ihr weg, und "tangential" ist eine Richtung, die in konstantem radialem Abstand zur Achse 7 und bei konstanter Axialposition kreisförmig um die Achse 7 herum gerichtet ist. Der Ausdruck "in Umfangsrichtung" ist mit "tangential" gleichzusetzen. In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 4 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Gleiche Bezugszeichen haben in den Figuren die gleiche Bedeutung.

Die beschriebenen Ausführungen im allgemeinen Beschreibungsteil als auch in der konkreten Figurenbeschreibung können beliebig kombiniert werden. Ebenso sind auch die dort erwähnten Einzelmerkmale der jeweiligen Ausführungen kombinierbar, ohne das Wesen der Erfindung zu verlassen.

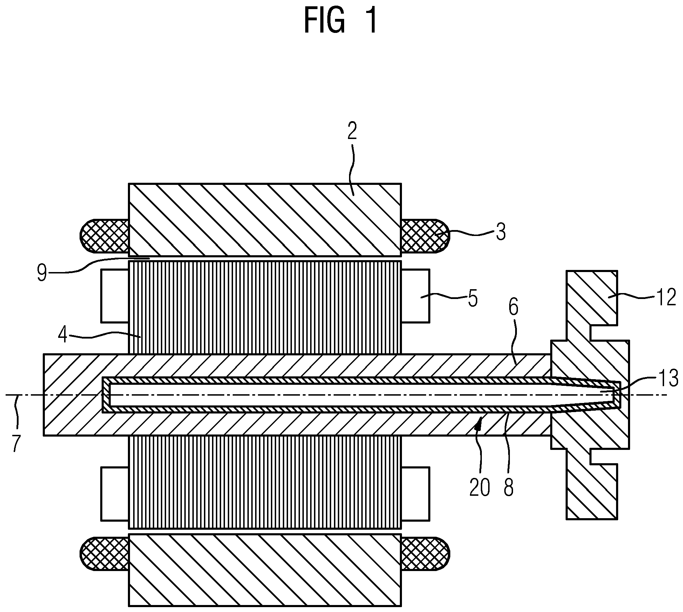

FIG 1 zeigt eine rotatorische dynamoelektrische Maschine 1, die einen Stator 2 und einen Rotor 4 aufweist. Der Rotor 4 ist in dieser Ausführungsform als Käfigläufer ausgeführt, kann jedoch auch ein mit Permanentmagneten versehener Rotor, ein Rotor einer Reluktanzmaschine oder ein Rotor mit einem Wicklungssystem sein. Durch elektromagnetische Wechselwirkung über einen Luftspalt 9 wird durch ein bestromtes Wicklungssystem 3 der Rotor 4 in Rotation um eine Achse 7 versetzt. Der Reluktanzrotor 3 ist koaxial zum Stator 2 angeordnet. Die Bleche des Rotors 4 sind als Blechpaket paketiert und mit einer Welle 6, in diesem Fall einer Welle 6 mit Wellenbohrung 8 drehfest und thermisch leitend verbunden.

Der Rotor 4 ist drehfest mit der als Hohlwelle ausgebildeten Welle 6 verbunden, wobei die Hohlwelle in nicht näher dargestellten Lagern gelagert ist. Unter einer drehfesten Verbindung ist dabei eine drehmomentenübertragende Verbindung, wie z.B. eine Schrumpfverbindung oder eine Passfeder-Verbindung oder eine andere Welle-Nabe-Verbindungen zwischen Blechpaket des Rotors 4 und der Welle 6 zu verstehen, die aber auf jeden Fall einen vergleichsweise guten wärmeleitenden Übergang vom Blechpaket des Rotors auf die Welle 6 darstellt.

An einem nicht näher dargestellten Gehäuse der elektrischen Maschine 1 befinden sich axial verlaufende Kühlrippen, die einen von einem Lüfter 12 erzeugten Kühlluftstrom entlang des Gehäuses führen. Der Lüfter 12 ist dabei aus Gründen des Berührungsschutzes und/oder der Führung des erzeugten Kühlluftstromes in einer Lüfterhaube untergebracht.

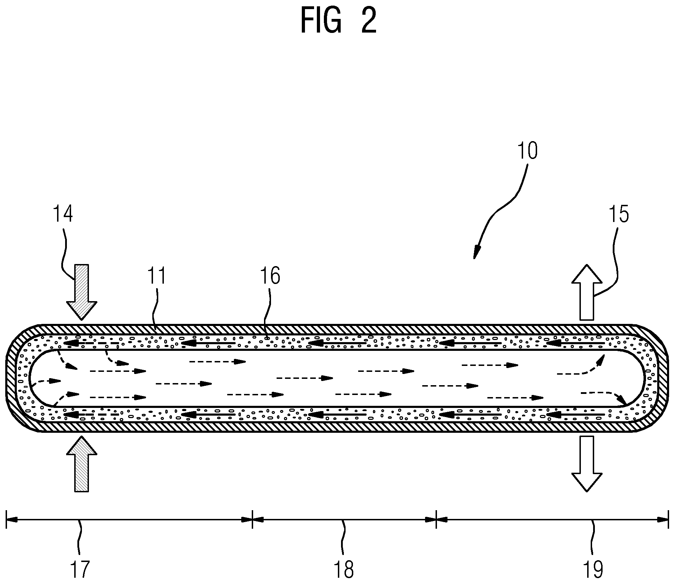

Die Welle 6 ist in dieser Ausführung mit einer zentralen axialen Ausnehmung der Wellenbohrung 8 versehen. Die der Wellenbohrung 8 angeordnete Heatpipe 10 weist gemäß FIG 2 eine Verdampferzone 17 im axialen Bereich des Rotors 4 auf. Axial daran schließt sich eine Transportzone 18 an, die in eine Kondensatorzone 19 übergeht. Die axiale Erstreckung der Verdampferzone 17 der Hohlwelle 6 entspricht zumindest der axialen Erstreckung des Blechpakets des Rotors 4.

In dieser Ausführung weist die Welle 6 eine zentrale Wellenbohrung 8 auf, es ist aber auch denkbar, dass mehrere achsparallele Bohrungen vorhanden sind, die in die dann mit dementsprechender Anzahl von Heatpipes beaufschlagt werden und in eine dementsprechend ausgestaltete Kondensatorzone 19 münden.

In der Kondensatorzone 19 findet die Rückkühlung des in der Heatpipe 10 zirkulierenden Kühlmediums, z.B. einer Verdampferflüssigkeit statt. Dabei ist entscheidend, dass zwischen dem Blechpaket und der Welle 6 als auch zwischen der Innenwandung 20 der Wellenbohrung 8 und der Heatpipe-Wandung, also einer Hülle 11 ein guter wärmetechnischer Übergang vorhanden ist. Des Weiteren ist für eine gute Kühleffizienz der dynamoelektrischen Maschine 1 eine effiziente Rückkühlung der Verdampferflüssigkeit in der Kondensatorzone 19 zu gewährleisten. In der Verdampferzone 17 wird bei einem Wärmeeintrag 14 aus dem Rotor 4 ein Kühlmedium unter Aufnahme von Wärme verdampft und in der Kondensatorzone 19 unter Wärmeabgabe 15 rückgekühlt. Insbesondere in der Transportzone 18 können geeignete Füllkörper den Transport des verdampften und/oder rückgekühlten Kühlmediums in der Heat Pipe 10 verbessern.

Die Heatpipe 10 verwendet dabei als Basismaterial für ihre Hülle 11 ein vergleichsweise dünnwandiges Rohr aus weichem Metall. Vorzugsweise wird dabei als Basismaterial weichgeglühtes Kupfer mit einer Brinellhärte im Bereich 35-40 HB eingesetzt.

Somit ist eine Umformbarkeit ohne große Krafteinwirkung möglich.

Zudem wird die Heat Pipe 10 in ihrer axialen Länge bzgl. der axialen Länge der Wellenbohrung 8 mit einem axialen Übermaß ausgestattet.

Die Heat Pipe 10 wird, zunächst mit einem etwas kleineren Durchmesser als die Wellenbohrung 8 ausgeführt, um ein einfaches Einsetzen der Heatpipe 10 in die Wellenbohrung 8 zu ermöglichen.

Nach dem Einsetzen in die Wellenbohrung 8 wird die Heatpipe 10 axial gestaucht.

Dies ist möglich, da die Hülle 11 der Heatpipe 10 aufgrund der geringen Härte leicht verformbar ist. Mit dem Stauchen dehnt sich die Hülle 11 radial aus - es wächst also der Außendurchmesser der Heatpipe 10, so dass ein direkter, großflächiger, gut wärmeleitender Kontakt der beiden Bauteile Welle 6 /Heatpipe 10 - genauer Innenwandung 20 der Wellenbohrung 8 und Hülle 11 der Heatpipe 10 - entsteht.

Das axiale Stauchen kann durch definierten vorgebbaren Druck und/oder definierte Schläge auf die überstehende Stirnseite der Heatpipe 10 erfolgen, indem z.B. ein Lüfter 12 auf diese Stirnseite wärmetechnisch leitend aufgebracht wird.

Dadurch lässt sich, in einfacher Art und Weise zumindest auf einem axialen Abschnitt der Kondensatorzone 19 auch ein Konus 13 durch das Aufschieben einer entsprechend geformten konischen Lüfternabe ausformen.

Die Außendurchmesser der Hülle 11 der Heatpipe 10 sowie der Konus 13 der Heatpipe 10 wird somit erst beim Zusammenbau der Welle 6, insbesondere mit dem Lüfter 12 geformt.

Es ist ebenso möglich bereits vorhandene Heatpipes 10 durch Weichglühen für diese Methode anzuziehen. Durch Weichglühen dieser Heatpipes 10 im Bereich von 400 - 600 °C erreicht man ebenfalls Härtewerte der Hülle 11 im Bereich 35-40 HB, die für die die oben beschriebene Methode geeignet sind und zu dem gewünschten Ergebnis führen.

Beim axialen Stauchen der Heatpipe 10 und der damit verbunden zumindest abschnittsweise Vergrößerung des Durchmessers der Hülle 11 der Heatpipe 10 besteht jedoch die Gefahr, dass die Kapillarstruktur an der Innenwand der Hülle 11 abplatzt.

Deshalb kann für diese Ausführung der Heatpipe 10 von vorneherein auch auf die Kapillarstruktur in der Heatpipe 10 verzichtet werden. Die Funktion der Kapillarstruktur bei diesen Heatpipes 10, z.B. die Transportfunktion des rückgekühlten Kühlmediums übernimmt beim Betrieb der dynamoelektrischen Maschine 1 die Rotordrehzahl. Durch Drehbewegung des Rotors 4 wird das Kühlmedium der Heat Pipe 10 radial nach außen geschleudert und verteilt sich als gleichmäßiger Film in axialer Richtung von der Kondensatorzone 19 zur Verdampferzone 17. Somit sind für den Transport des Kühlmediums nicht zwangsläufig Kapillare notwendig.

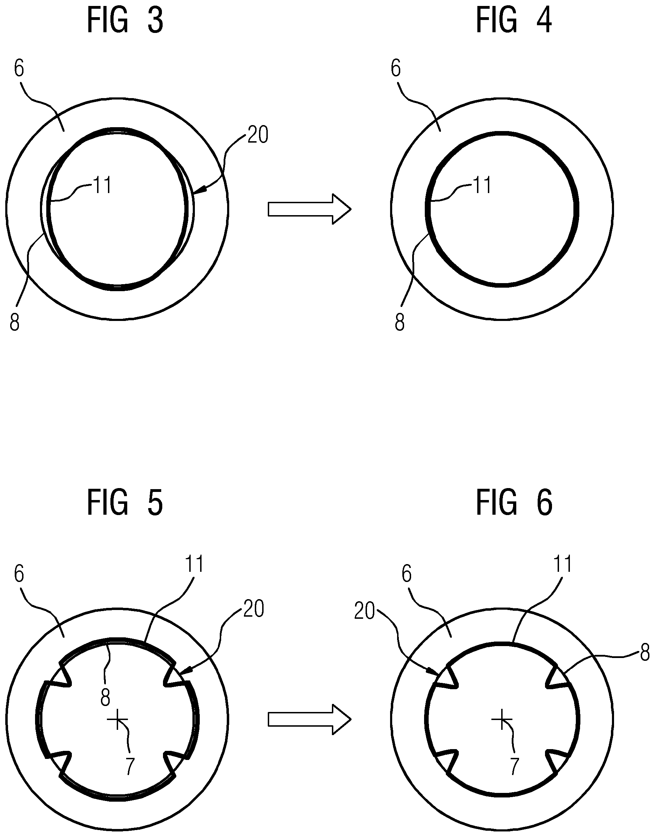

In einer weiteren Ausführung gemäß den FIG 3 bis 4 wird der Querschnitt der Heatpipe 10 nicht kreisrund gestaltet, sondern derart, dass sich beim axialen Fügen der Heatpipe 10 in der Wellenbohrung 8 eine Verformung einstellt, die einerseits das Einschieben mit geringer Kraft ermöglicht und zudem eine Erhöhung der Kontaktfläche erreicht wird.

Dabei ist vor dem Fügen gemäß FIG 3 ein Übermaß in mindestens einer Ebene vorhanden, also umfänglich betrachtet liegt abschnittsweise ein Übermaß vor.

Eine vorzugweise Gestaltung des Querschnitts der Heatpipe 10 kann z.B. eine elliptische oder eine Kleeblattform gemäß FIG 3 oder FIG 5 sein, womit sich durch die Verformung beim axialen Einschieben in die Wellenbohrung 8 bei umfänglicher Betrachtung eine relativ große Kontaktfläche zur Innenseite der Wellenbohrung 8 im Winkel von ca. 300° und mehr ergibt.

Im Betrieb der dynamoelektrischen Maschine 1, unter Fliehkrafteinwirkung, bleibt es bei einem stabilen Kontakt der Heatpipe 10 zur Welle 6, insbesondere der Hülle 11 zur Innenwandung 20 der Wellenbohrung 8.

Idealerweise ist zumindest eine Stirnseite der Heatpipe 10 also im Bereich der Kondensationszone 19 und/oder der Verdampfungszone 17 leicht konisch verlaufend, so dass diese Geometrie das Einfädeln der Heatpipe 10 in die Wellenbohrung 8 erleichtert.

Durch diese optimale wärmetechnische Anbindung der Heatpipe 10 an die Welle 6 stellt sich für Asynchronmotoren und Synchronmotoren eine Effizienzsteigerung durch verbesserte Kühlung ein.

Das aufwändige Positionieren von Wärmeleitpasten in der Wellenbohrung 8 und Überwachung auf deren Alterung wird dadurch vermieden. Es können einfache Heatpipes 10 verwendet werden, die keine Kapillarstruktur erfordern.

Derartige dynamoelektrische Maschinen 1 werden, insbesondere im industriellen Umfeld u.a. als Antrieb für Lüfter, Pumpen, Verdichtern etc. verwendet, da nunmehr auch ohne eine Durchzugsbelüftung eine ausreichende Kühlung des Rotors 4 unabhängig von seinem Aufbau geschaffen ist. Eine Durchzugsbelüftung führt bei stark staubhaltiger Luft und/oder alternierendem Betrieb des Motors mit Stillstandszeiten zu unzureichender Kühlung vor allem des Rotors 4.

### Bezugszeichenliste

- 1: dynamoelektrische Maschine
- 2: Stator
- 3: Wicklungssystem
- 4: Rotor
- 5: KS-Käfig
- 6: Welle
- 7: Achse
- 8: Wellenbohrung
- 9: Luftspalt
- 10: Heatpipe
- 11: Hülle Heatpipe
- 12: Lüfter
- 13: konusförmige Kondensationszone
- 14: Wärmeeintrag
- 15: Wärmeabgabe
- 16: Kapillarstruktur
- 17: Verdampferzone
- 18: Transportzone
- 19: Kondensatorzone
- 20: Innenwandung Wellenbohrung

## Patentansprüche

1. Verfahren zur thermischen Anbindung einer Heatpipe (10) an die Innenwandung (20) einer Wellenbohrung (8) eines Rotors (4) einer dynamoelektrischen rotatorischen Maschine (1) durch folgende Schritte:
- eine Welle (6) des Rotors (4) wird mit einer Wellenbohrung (8), insbesondere einer Sackbohrung oder Durchgangsbohrung versehen,
- die Heatpipe (10), die eine geschlossene Hülle (11) aufweist, wird mittels Umformen an die Innenwandung (20) der Wellenbohrung (8) thermisch angebunden.

2. Verfahren zur thermischen Anbindung einer Heatpipe (10) an die Innenwandung (20) einer Wellenbohrung (8) eines Rotors (4) einer dynamoelektrischen rotatorischen Maschine (1) nach Anspruch 1, **dadurch gekennzeichnet, dass** die Hülle (11) der Heatpipe (10) aus einem geschlossenen dünnwandigen Rohr aus vergleichsweise weichem Metall besteht, um umgeformt zu werden.

3. Verfahren zur thermischen Anbindung einer Heatpipe (10) an die Innenwandung (20) einer Wellenbohrung (8) eines Rotors (4) einer dynamoelektrischen rotatorischen Maschine (1) nach Anspruch 1 oder 2, **dadurch gekennzeichnet , dass** die Heatpipe (10), insbesondere deren Hülle (11) weichgeglüht wird, um umgeformt zu werden.

4. Verfahren zur thermischen Anbindung einer Heatpipe (10) an die Innenwandung (20) einer Wellenbohrung (8) eines Rotors (4) einer dynamoelektrischen rotatorischen Maschine (1) nach Anspruch 2 oder 3, **dadurch gekennzeichnet , dass** als Hülle (11) der Heatpipe (10) vorzugsweise weichgeglühtes Kupfer mit einer Brinellhärte im Bereich 35-40 HB verwendet wird.

5. Verfahren zur thermischen Anbindung einer Heatpipe (10) an die Innenwandung (20) einer Wellenbohrung (8) eines Rotors (4) einer dynamoelektrischen rotatorischen Maschine (1), da **durch gekennzeichnet**, dass die Heatpipe (10) in ihrer axialen Länge bzgl. der Eintauchtiefe in die Wellenbohrung (8) mit einem axialen Übermaß oder einem axialen Übermaß und einem kleineren Durchmesser als die Wellenbohrung (8) ausgeführt ist.

6. Verfahren zur thermischen Anbindung einer Heatpipe (10) an die Innenwandung (20) einer Wellenbohrung (8) eines Rotors (4) einer dynamoelektrischen rotatorischen Maschine (1) nach einem der vorhergehenden Ansprüche, d a **durch gekennzeichnet**, dass nach dem Einsetzen der Heatpipe (10) in die Wellenbohrung (8) die Hülle (11) der Heatpipe (10) axial gestaucht wird.

7. Verfahren zur thermischen Anbindung einer Heatpipe (10) an die Innenwandung (20) einer Wellenbohrung (8) eines Rotors (4) einer dynamoelektrischen rotatorischen Maschine (1) nach Anspruch 6, **dadurch gekennzeichnet, dass** das axiale Stauchen der Hülle (11) der Heatpipe (10) durch vorgebbaren Druck oder Schläge auf die überstehende Stirnseite der Hülle (11) der Heatpipe (10) erfolgt.

8. Verfahren zur thermischen Anbindung einer Heatpipe (10) an die Innenwandung (20) einer Wellenbohrung (8) eines Rotors (4) einer dynamoelektrischen rotatorischen Maschine (1) , **dadurch gekennzeichnet, dass** sich axiales Aufschieben einer entsprechend konischen Nabe eines Lüfters (12) ein Konus (13) zumindest abschnittsweise auf der Kondensatorzone (19) ausbilden lässt.

9. Verfahren zur thermischen Anbindung einer Heatpipe (10) an die Innenwandung (20) einer Wellenbohrung (8) eines Rotors (4) einer dynamoelektrischen rotatorischen Maschine (1), nach Anspruch 1, **dadurch gekennzeichnet , dass** die Hülle (119 der Heatpipe (10) mit im Querschnitt abweichender Form von dem Querschnitt der Wellenbohrung (8) vorliegt, wobei die Heatpipe (10) insbesondere nicht kreisrund gestaltet, sodass vor dem axialen Fügen ein Übermaß der Hülle (11) der Heatpipe (10) in mindestens einer Ebene vorhanden ist, derart, dass sich beim axialen Fügen der Heatpipe (10) in die Bohrung eine Verformung einstellt, die einerseits ein axiales Einschieben mit geringer Kraft ermöglicht und zudem eine Erhöhung der Kontaktfläche zwischen Hülle (11) und Innenwandung (20) der Bohrung erreicht wird.

10. Verfahren zur thermischen Anbindung einer Heatpipe (10) an die Innenwandung (20) einer Wellenbohrung (8) eines Rotors (4) einer dynamoelektrischen rotatorischen Maschine (1), nach Anspruch 9, **dadurch gekennzeichnet , dass** die Hülle (11) im Querschnitt betrachtet, eine elliptische oder eine Kleeblattform aufweist, womit sich durch die Verformung der Hülle (11) beim axialen Einschieben eine vergleichsweise große Kontaktfläche zur Innenwandung (20) der Bohrung im Winkel von umfänglich betrachtet ca. 300° ergibt.

11. Rotor (4), mit einer Welle (6), wobei die Welle (6) eine Wellenbohrung (8) aufweist, in der eine Heatpipe (10), die eine geschlossene Hülle (11) aufweist, mittels Umformen gemäß einem der Ansprüche 1 bis 10 an die Innenwandung (20) der Wellenbohrung (8) thermisch angebunden ist, wobei zumindest eine Verdampferzone (8) der Heatpipe (10) im Bereich eines Blechpakets oder eines sonstigen magnetflussleitendes Elements des Rotors (4) angeordnet ist.

12. Dynamoelektrische Maschine (1) mit einem Stator (2) und einem Rotor (5) nach Anspruch 11 und einem Kühler auf der Kondensatorzone (19).

13. Dynamoelektrische Maschine (1) nach Anspruch 12, **dadurch gekennzeich- net**, dass der Kühler als Eigenlüfter ausgebildet ist.
